Europäisches Patentamt

European Patent Office

Office européen des brevets

(11) Veröffentlichungsnummer: **0 490 092 A2**

# EUROPÄISCHE PATENTANMELDUNG

(21) Anmeldenummer: **91119208.6**

(22) Anmeldetag: **12.11.91**

(51) Int. Cl.⁵: **C03C 27/04**, B60J 1/02

(30) Priorität: **14.12.90 DE 4040009**

(43) Veröffentlichungstag der Anmeldung:
**17.06.92 Patentblatt 92/25**

(84) Benannte Vertragsstaaten:
**AT BE CH DE DK ES FR GB GR IT LI LU NL SE**

(71) Anmelder: **GUMMI-HENNIGES GmbH & CO. KG.**
**Hildesheimer Strasse 410**
**W-3000 Hannover 89(DE)**

(72) Erfinder: **Döpke, Franz-Adolf**
**Ginsterweg 14**
**W-3056 Rehburg-Loccum 1(DE)**
Erfinder: **Krauss, Rolf, Ing.**
**Brinkfeldstrasse 24**
**W-3232 Bad Münder 1(DE)**
Erfinder: **Leistner, Rolf, Ing.**
**Rambertweg 13**
**W-8000 München 50(DE)**

(74) Vertreter: **Wehser, Wulf, Dipl.-Ing. et al**
**Patentanwälte Wehser und Partner**
**Roscherstrasse 12**
**W-3000 Hannover 1(DE)**

(54) **Kunststoffumspritzte Glasscheibe.**

㊗ Eine kunststoffumspritzte Glasscheibe, insbesondere als Fenster für Kraftfahrzeuge, bei welcher die Umspritzung aus PVC, Gummi oder einem thermoplastischem Elastomer besteht, wobei der Umspritzung eine der Verklebung der Glasscheibe in ihrem Gehäuse dienende Klebschicht aus Polyurethan zugeordnet ist, die mit einer zweiten Klebschicht aus Polyurethan zur Festlegung der Scheibe an ihrem Bestimmungsort versehbar ist, soll so ausgebildet werden, daß trotz der Verwendung einer billigen PVC-Schicht für die Umspritzung bzw. einer aus anderem billigem Material bestehenden Schicht eine einwandfreie Verbindung mit dem Gehäuse erzielbar ist.

Hierzu ist erfindungsgemäß vorgesehen, daß die Klebschicht aus Polyurethan auf die dem Gehäuse zugewandte Fläche der Umspritzung aufgebracht ist, wobei die Polyurethanschicht eine geringe Stärke aufweist.

EP 0 490 092 A2

Die Erfindung betrifft eine kunststoffumspritzte Glasscheibe, insbesondere als Fenster für Kraftfahrzeuge, bei welcher die Umspritzung aus PVC, Gummi oder einem thermoplastischem Elastomer besteht, wobei der Umspritzung eine der Verklebung der Glasscheibe in ihrem Gehäuse dienende Klebschicht aus Polyurethan zugeordnet ist, die mit einer zweiten Klebschicht aus Polyurethan zur Festlegung der Scheibe an ihrem Bestimmungsort versehbar ist, welche also bei einem Kraftfahrzeug die Verbindung zu der Karosserie herstellt.

Die Erfindung betrifft darüber hinaus das Verfahren zur Herstellung derartiger umspritzter Glasscheiben.

Bei bekannten Glasscheiben dieser Art ist die zusätzliche Anbringung einer aus Polyurethan bestehenden Schicht deswegen erforderlich, weil die PVC-Schicht zur Verbindung mit dem Gehäuse in der Regel ungeeignet ist, da sie Weichmacher aussondert, welche eine zusätzliche Versiegelung bzw. eine besondere Primerung erforderlich machen. Die Klebschichten aus Polyurethan sind dicht neben der aus PVC bestehenden Umspritzung angeordnet.

Der Erfindung liegt demgemäß die Aufgabe zugrunde, eine Glasscheibe der eingangs genannten Art so auszubilden, daß trotz der Verwendung einer billigen PVC-Schicht für die Umspritzung bzw. einer aus anderem billigem obengenannten Material bestehenden Schicht eine einwandfreie Verbindung mit dem Gehäuse erzielbar ist. Hierbei sollen die Nachteile der bekannten Anordnung vermieden werden, die darin bestehen, daß eine relativ dicke und damit teure Polyurethanklebschicht Verwendung findet.

Die obengenannte Aufgabe wird erfindungsgemäß dadurch gelöst, daß die Klebschicht aus Polyurethan auf die dem Gehäuse zugewandte Fläche der Umspritzung aufgebracht ist, wobei die Polyurethanschicht eine geringe Stärke aufweist.

Mit dieser Anordnung wird erreicht, daß neben der Kosteneinsparung durch die dünne Polyurethanschicht zugleich die Umspritzung (PVC-Schicht)-als Distanzhalter zum Gehäuse herangezogen werden kann, so daß diese die eigentliche Abstützung der Glasscheibe bildet und nicht, wie bei der bekannten Anordnung, eine der Verbindung dienende dicke Polyurethanschicht.

Hierzu wird die Klebschicht aus Polyurethan nicht wie bei der bekannten Anordnung neben der PVC-Schicht auf das Glas, sondern auf die PVC-Schicht selbst aufgebracht. Die Verwendung einer Klebschicht aus Polyurethan bleibt bei der erfindungsgemäßen Anordnung wegen der geringen Stärke dieser Schicht kostengünstig.

Ein weiterer Vorteil besteht darin, daß trotz der Verwendung dieser dünnen Polyurethanschicht die eigentliche Befestigung im Gehäuse (Autokarosserie) durch einen weiteren auf die erste Polyurethanschicht aufbringbaren Polyurethanstreifen erfolgen kann, der dann ebenfalls relativ dünn gehalten werden kann, weil auch der größte Teil seiner Stärke durch die PVC-Schicht ersetzt werden kann.

Die bekannte Anordnung hat insbesondere den weiteren Nachteil, daß die Polyurethanschicht die Sichtfläche des Fensters verkleinert, und zwar in Abhängigkeit von den jeweiligen Gegebenheiten in nicht unbeträchtlichem Maße; denn Schichten dieser Art sind bis zu 15 mm breit.

Trotz der obengenannten Vorteile besteht bei der erfindungsgemäßen Anordnung die Möglichkeit, derartige Scheiben als fertigkonfektioniertes Fenster zu liefern, da auf die dünne vorab aufgebrachte und mitgelieferte Polyurethanschicht Polyurethanschichten bekannter Abmessungen ohne weiteres aufgebracht werden können.

Die Polyurethanschicht kann neben bestimmten endlichen Dicken in pastöser Form aufgebracht werden, so daß eine sehr dünne Schicht mit einer Stärke von unter 0,5 mm entsteht. Es besteht sogar die Möglichkeit, die Polyurethanschicht in Form eines Polyurethanlackes aufzubringen, dessen hierdurch erzeugte Schicht kann noch geringere Abmessungen aufweisen.

Weiterhin kann erfindungsgemäß vorgesehen sein, auch die zweite, die Verbindung zwischen der Polyurethanschicht und dem Gehäuse herstellende Schicht ebenfalls in dünnflüssiger Form, vorzugsweise in Form eines Lackes, aufzubringen.

Die Erfindung wird im folgenden anhand von Ausführungsbeispielen in der Zeichnung näher erläutert.

Fig. 1     zeigt in schematischer Darstellung eine kunststoffumspritzte Glasscheibe, welche als Karosseriefenster für Kraftfahrzeuge dient und auf welche die Erfindung Anwendung findet.

Fig. 2     ist der Schnitt II-II nach Fig. 1.

Fig. 3     ist ein Schnitt ähnlich Fig. 2 bei einer anderen Ausführungsform.

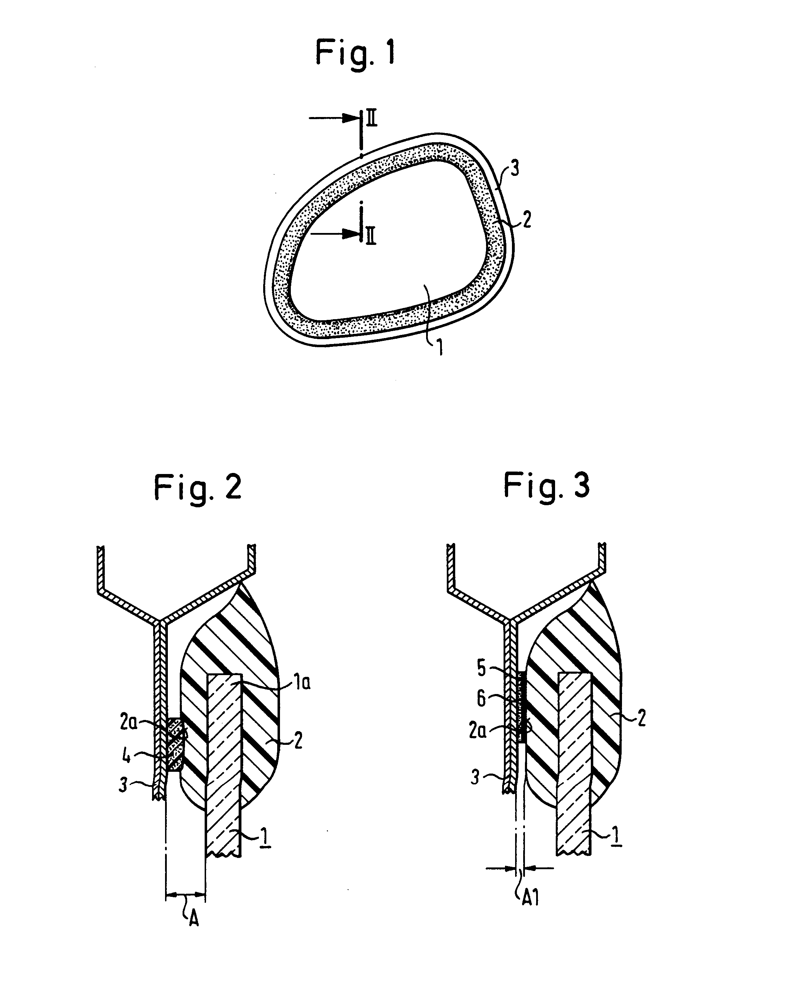

Gemäß Fig. 1 ist eine Glasscheibe 1 mit einer Kunststoffumspritzung 2 versehen, mit welcher sie in einen entsprechenden Ausschnitt in einer Kraftfahrzeugkarosserie 3 eingeklebt wird.

Fig. 2 ist der Schnitt II-II in vergrößertem Maßstab und verdeutlicht diese Verhältnisse. Die Kunststoffumspritzung 2 aus PVC ist umlaufend auf die Glasscheibe 1 im Bereich des Randes 1a der Glasscheibe auf diese aufgebracht. Sie wird bei der erfindungsgemäßen Anordnung nach Fig. 2 mittels einer dünnen Polyurethanschicht 4 mit der ihr zugewandten Fläche des Kraftfahrzeuggehäuseausschnittes 3 verklebt. Wie aus Fig. 2 hervorgeht, ist die Polyurethanschicht 4 sehr dünn gehalten, so daß der größte Teil des Abstandes A zwischen der Glasscheibe 1 und dem Gehäuse 3 durch die vorzugsweise aus PVC bestehende Umspritzung 2 ausgefüllt wird. Da die Polyurethanschicht 4 sich vergleichsweise einfach verkleben läßt, treten die oben beschriebenen Probleme der Verklebung der PVC-Schicht 2 mit der Gehäusewandung 3 nicht auf.

Die Polyurethanschicht 4 bei der Ausführungsform nach Fig. 2 kann so dünn gehalten sein, daß sie in pastöser Form aufgebracht werden kann.

Fig. 3 ist ein Schnitt ähnlich Fig. 2 und verdeutlicht eine Ausführungsform, bei welcher eine Polyurethanschicht 5 Verwendung findet, die eine noch geringere Stärke hat und vorzugsweise in flüssiger Form, gegebenenfalls in Form eines Polyurethanlackes, auf die PVC-Schicht 2 aufgebracht wird. In dieser Weise konfektioniert, kann die umspritzte Glasscheibe 1 an den Verwerter, beispielsweise einen Automobilhersteller, geliefert werden, der dann in einfacher Weise durch Aufbringen einer zweiten, ebenfalls dünnen und gegebenenfalls flüssig zu verwendenden Polyurethanschicht 6 das umspritzte Fenster in die Kraftfahrzeugkarosserie einkleben kann.

Entsprechendes gilt für andere Anwendungsbereiche.

## Patentansprüche

1. Kunststoffumspritzte Glasscheibe, insbesondere als Fenster für Kraftfahrzeuge, bei welcher die Umspritzung aus PVC, Gummi oder einem thermoplastischem Elastomer besteht, wobei der Umspritzung eine der Verklebung der Glasscheibe in ihrem Gehäuse dienende Klebschicht aus Polyurethan zugeordnet ist, die mit einer zweiten Klebschicht aus Polyurethan zur Festlegung der Scheibe an ihrem Bestimmungsort versehbar ist, dadurch gekennzeichnet, daß die Klebschicht (4,5) aus Polyurethan auf die dem Gehäuse (3) zugewandte Fläche (2a) der Umspritzung (2) aufgebracht ist, wobei die Polyurethanschicht (4,5) eine geringe Stärke aufweist.

2. Glasscheibe nach Anspruch 1, dadurch gekennzeichnet, daß auf die erste Polyurethanschicht (4,5) eine weitere Polyurethanschicht (6) aufbringbar ist.

3. Glasscheibe nach Anspruch 1 oder 2, dadurch gekennzeichnet, daß die Polyurethanschicht (4) in Form eines handhabbaren Streifens mit einer endlichen Dicke aufgebracht wird.

4. Glasscheibe nach Anspruch 1 oder 2, dadurch gekennzeichnet, daß die Polyurethanschicht (4,5) in pastöser Form aufgebracht wird.

5. Glasscheibe nach einem der Ansprüche 1 oder 2, dadurch gekennzeichnet, daß die Polyurethanschicht (5) eine Stärke von weniger als 0,5 mm aufweist.

6. Glasscheibe nach Anspruch 1 oder 2, dadurch gekennzeichnet, daß die Polyurethanschicht (5) in Form eines Polyurethanlackes aufgebracht ist.

7. Glasscheibe nach Anspruch 6, dadurch gekennzeichnet, daß eine zweite der Verbindung mit dem Gehäuse (3) beim Hersteller der Kraftfahrzeuge dienende Polyurethanschicht (6) auf die erste Polyurethanschicht (5) in dünnflüssiger Form, vorzugsweise in Form eines Lackes, aufbringbar ist.

8. Verfahren zur Herstellung kunststoffumspritzter Glasscheiben, insbesondere als Fenster für Kraftfahrzeuge, bei welcher die Umspritzung aus PVC, Gummi oder einem thermoplastischem Elastomer besteht, wobei der Umspritzung eine der Verklebung der Glasscheibe in ihrem Gehäuse dienende Klebschicht aus Polyurethan zugeordnet ist, die mit einer zweiten Klebschicht aus Polyurethan zur Festlegung der Scheibe an ihrem Bestimmungsort versehbar ist, dadurch gekennzeichnet, daß die Klebschicht aus Polyurethan auf die dem Gehäuse zugewandte Fläche der Umspritzung in geringer Stärke aufgebracht wird.

# Fig. 1

# Fig. 2

# Fig. 3

4